**Europäisches Patentamt**

**European Patent Office**

**Office européen des brevets**

(19)

(11) Numéro de publication: **0 150 715 B2**

(12)
# NOUVEAU FASCICULE DE BREVET EUROPEEN

(45) Date de publication de nouveau fascicule du brevet: **24.08.94**

(51) Int. Cl.5: **C08B 30/14**

(21) Numéro de dépôt: **85100091.9**

(22) Date de dépôt: **05.01.85**

(54) **Procédé de préparation d'un amidon dispersible dans l'eau bouillante.**

(30) Priorité: **01.02.84 CH 466/84**

(43) Date de publication de la demande:
**07.08.85 Bulletin 85/32**

(45) Mention de la délivrance du brevet:
**08.02.89 Bulletin 89/06**

(45) Mention de la décision
concernant l'opposition:
**24.08.94 Bulletin 94/34**

(84) Etats contractants désignés:
**AT DE FR NL SE**

(56) Documents cités:
**EP-A- 0 076 381**
**EP-A- 0 138 010**
**DE-A- 1 567 354**
**DE-A- 2 930 664**
**US-A- 3 537 893**

**CHEMICAL ABSTRACTS, vol. 81, no. 14, 17
octobre 1984, page 107, no. 79634p, Columbus, Ohio, US; & JP-A-74 41549**

(73) Titulaire: **SOCIETE DES PRODUITS NESTLE
S.A.**
**Case postale 353**
**CH-1800 Vevey (CH)**

(72) Inventeur: **Würsch, Pierre**
**Chemin de la Crausaz 64**
**CH-1814 La Tour-de-Peilz (CH)**
Inventeur: **Roulet, Philippe**
**Route de Blonay 138**
**CH-1814 La Tour-de-Peilz (CH)**

(74) Mandataire: **Wavre, Claude-Alain et al**
**55, avenue Nestlé**
**CH-1800 Vevey (CH)**

EP 0 150 715 B2

Rank Xerox (UK) Business Services
(3.10/3.09/3.3.3)

## Description

La présente invention a pour objet un procédé de préparation d'un amidon dispersible dans l'eau bouillante, par traitement thermique en présence d'eau et d'un émulsifiant, ainsi qu'un amidon dispersible obtenu par ce procédé.

L'utilisation culinaire des amidons de céréales, de tubercules ou d'autres féculents comme liants ou comme épaississants, notamment lors de la confection de sauces et potages est souvent malaisée. Il est en effet difficile de maîtriser la vitesse de gélatinisation et le pouvoir épaississant des amidons. Lorsqu'on essaye par exemple de disperser un amidon, seul ou en mélange avec d'autres ingrédients eux-mêmes dispersibles dans l'eau bouillante, en le déversant directement dans l'eau bouillante et en brassant, on ne peut éviter la formation de grumeaux.

Divers procédés ont été proposés pour améliorer la dispersibilité des amidons dans l'eau bouillante. L'un consiste à traiter l'amidon à la chaleur en présence d'eau dans des conditions telles que la gélatinisation de l'amidon soit évitée. Parmi les conditions typiques qui ont été décrites, on peut citer un chauffage à 90-120°C en présence de environ 20 à 25% d'eau en enceinte fermée durant 2 à 3 h. On peut citer en particulier des conditions de traitement décrites comme relativement douces consistant à chauffer en enceinte fermée un amidon natif de pommes de terre à 19,2% d'humidité durant 115 min à 103°C de manière à obtenir un retardement de la gélatinisation de l'amidon dans l'eau bouillante de quelques secondes seulement et à conserver une viscosité finale de la dispersion relativement élevée.

Un autre procédé proposé a été de traiter l'amidon aux micro-ondes dans des conditions telles qu'il n'atteigne pas une température supérieure à 100°C et que sa cristallinité diminue d'au moins 50% sans qu'il gélatinise. L'amidon peut être humidifié de manière qu'il présente p. ex. un taux d'humidité de 25 à 50% et le traitement peut durer de 20 s à 15 min. La dispersibilité dans l'eau bouillante de l'amidon ainsi traité ne dépasse cependant guère 50% dans le meilleur des cas.

Encore un autre procédé, proposé dans EP-0 076 381, a été de traiter l'amidon à la chaleur en présence d'eau et d'un émulsifiant dans des conditions telles que l'amidon forme un complexe avec l'émulsifiant tout en ne gélatinisant pas. Les conditions décrites (50-120°C, 10-40% d'eau, 3-16 h) sont très semblables aux conditions typiques citées ci-dessus à propos du traitement à la chaleur en présence d'eau, avec en plus la présence d'au moins 0,25% d'un émulsifiant. Les temps de traitement sont de plusieurs heures. Le traitement est réalisé de préférence en enceinte fermée. Ce procédé semble particulièrement efficace pour le tapioca.

La présente invention a pour but de proposer un procédé de préparation d'un amidon dispersible dans l'eau bouillante qui soit réalisable en quelques minutes et qui donne des résultats particulièrement bons avec l'amidon de pommes de terre.

A cet effet, le procédé selon la présente invention est caractérisé par le fait que l'on prépare un mélange d'amidon, d'un émulsifiant comprenant au moins un monoester d'acide gras, à raison de 1 à 5% en poids de monoester d'acide gras par rapport au poids sec de l'amidon, et d'eau, de sorte que la teneur en eau du mélange soit de 20 à 30% en poids, et l'on traite thermiquement le mélange aux micro-ondes la une température de 90-120°C durant 1-20 min pour obtenir un amidon dispersible à 95-100% dans l'eau bouillante. De préférence, ledit amidon est l'amidon de pommes de terre.

On a constaté en effet qu'un taux de complexation de l'amylose par des monoesters d'acides gras dans les granules d'amidons natifs compris entre environ 50-100% du taux maximum possible pouvant être obtenu en une ou quelques minutes par un traitement thermique de l'amidon à une température supérieure ou égale à 90°C en présence d'une quantité suffisante de monoester d'acide gras et d'une quantité adéquate d'eau.

L'amidon dispersible dans l'eau bouillante obtenu par le procédé selon la présente invention peut être caractérisé par le fait qu'il présente une température de gélatinisation supérieure à 80°C et une viscosité Brabender croissante ou constante en dispersion aqueuse à 95°C. De préférence, il présente une viscosité Brabender en dispersion aqueuse à 6% en poids comprise entre 150 et 350 unités Brabender (BU) après 5 min à 95°C.

Dans le présent exposé, la température de gélatinisation est définie comme la température à laquelle une dispersion aqueuse à 6% en poids d'amidon atteint une viscosité Brabender de 20 BU au début d'un amylogramme tracé à l'aide d'un amylographe Brabender.

A titre de rappel, on peut noter ici qu'un tel amylogramme indique l'évolution de la viscosité d'une suspension ou dispersion aqueuse de matière amylacée en fonction de la température au cours d'un programme comportant une période de chauffage, une période d'attente et une période de refroidissement bien définies. Au cours de la période de chauffage, la température de la dispersion est portée linéairement d'environ 20°C à 95°C à raison de 1.5°C/min. Au cours de la période d'attente, la température est maintenue à 95°C durant 20 à 30 min. Au cours de la période de refroidissement, la température est ramenée linéairement au point de départ à raison de 1,5°C/min. Au cours de ce programme, la dispersion est soumise à un brassage mécanique dans des conditions immuables connues de l'homme du métier. C'est la résistance de la dispersion au brassage qui est prise comme critère de la viscosité et exprimée en unités univoques dites unités Brabender et symbolisées par les lettres BU.

De même donc, dans le présent exposé, une expression telle que «la viscosité Brabender après 5 min à 95°C» est à comprendre comme la viscosité présentée par une dispersion sur son amylogramme après les 5 premières minutes d'attente ou maintien à 95°C.

Enfin, ladite dispersibilité de l'amidon dans l'eau bouillante est déterminée par un test standard consistant à verser 6 g d'amidon dans 200 ml d'eau en ébullition, agiter doucement avec une cuillère durant 15 s, laisser reposer durant 30 s puis passer à travers un tamis à ouvertures de 0,85 mm. Les grumeaux retenus sont séchés à l'étuve à 120°C durant 5 h puis pesés. La dispersibilité exprimée en % est égale à la différence entre le poids d'amidon testé et le poids d'amidon retenu divisée par le poids d'amidon testé et multipliée par cent.

Pour mettre en oeuvre le procédé selon la présente invention, on peut utiliser tout amidon dont la température de gélatinisation et la résistance au gonflement sont susceptibles d'être augmentées par le présent procédé de manière telle qu'il soient dispersibles à 95-100% dans l'eau bouillante. L'amidon de pommes de terre convient particulièrement bien.

Parmi les émulsifiants formant des complexes avec l'amylose, ceux formés de ou contenant un monoester d'acide gras conviennent dans les proportions indiquées. Si l'émulsifiant est utilisé à raison de moins de 1% en poids de monoester d'acide gras par rapport au poids sec de l'amidon, on obtient un taux de complexation insuffisant de l'amylose. Par contre, il est inutile d'utiliser l'émulsifiant à raison de plus de 5% de monoester d'acide gras par rapport au poids sec de l'amidon, un taux maximum de complexation pouvant déjà être obtenu avec des quantités moindres.

Parmi les monoesters d'acides gras, on utilise de préférence les mono ou polyalcools du type glycérol et ses dérivés, propylène glycol, sorbitane, lactylate et glucides mono estérifiés aux acides gras. Des résultats particulièrement concluants peuvent être obtenus notamment avec des monoglycérides distillés d'origine végétale, les monostéarate et monopalmitate de glycérol d'origine animale, le stearoyl-2-lactylate et le propylène glycol monostéarate.

L'eau doit être ajoutée au mélange de sorte que la teneur en eau du mélange soit de 20 à 30% en poids. Si l'on ajoute moins d'eau, on n'obtient pas un faux de complexation suffisant de l'amylose par l'émulsifiant. Si l'on ajoute davantage d'eau, on risque de provoquer une gélatinisation au moins partielle de l'amidon.

Pour préparer le mélange, on peut prémélanger l'émulsifiant sous agitation intense avec tout ou partie de la quantité d'eau nécessaire pour obtenir la teneur en eau désirée, après avoir porté cette eau à une température supérieure au point de fusion de l'émulsifiant. On peut ajouter ensuite ce prémélange et le complément d'eau éventuel à l'amidon en brassant vigourseusement.

On doit traiter ensuite thermiquement le mélange à une température de 90-120°C durant 1-20 min. Si l'on réalise le traitement à une température inférieure à 90°C ou durant moins de 1 min, on n'obtient pas un aux de complexation suffisant de l'amylose par l'émulsifiant. Si l'on réalise le traitement a une température supérieure à 120°C ou durant plus de 20 min, on risque de provoquer une gélatinisation au moins partielle de l'amidon.

On réalise ledit traitement thermique aux micro-ondes en choisissant p. ex. une puissance de rayonnement telle que la température du mélange soit rapidement portée au voisinage de 100°C mais que l'eau du mélange ne soit pas trop rapidement évaporée. On prépare de préférence un mélange présentant une teneur en eau de 25 à 30% en poids et l'on fait durer le traitement entre 1 et 5 min. Le mélange ainsi traité peut se prendre en masse et se durcir en sortant d'un four ou d'un tunnel à micro-ondes. On peut alors le broyer grossièrement, le sécher et le broyer finement.

De manière générale, une fois traité thermiquement dans les conditions indiquées, le mélange peut être séché, p. ex. sous vide ou à l'air chaud, jusqu'à ce que sa teneur en eau résiduelle soit inférieure à environ 10% de manière que l'amidon dispersible ainsi obtenu présente de bonnes qualités de conservation et de bonnes qualités d'écoulement sous forme de grains fins.

A ce propos, on peut affirmer qu'une granulométrie précise n'a pas une influence prépondérante sur les qualités de dispersibilité dudit amidon dispersible, si ce n'est que des aggrégats trop volumineux ou des fragments d'une mouture trop grossière risquent de mettre trop de temps à se dissoudre dans l'eau bouillante. Au cas où le présent amidon dispersible est destiné à être utilisé en combinaison avec d'autres ingrédients eux-mêmes dispersibles dans l'eau bouillante, on choisit de préférence une granulométrie fine, notamment des dimensions inférieures à 0,5 mm, pour pouvoir confectionner p. ex. des granulés avec un mélange de tous les ingrédients.

L'amidon dispersible obtenu par le présent procédé peut être caractérisé plus précisément par divers faits, mentionnés ci-dessus, qui sont la cause de sa dispersibilité à 95-100% dans l'eau bouillante. Le premier fait est qu'il présente une température de gélatinisation supérieure à 80°C, c'est-à-dire une température de gélatinisation nettement plus élevée que celle des amidons natifs qui provoque donc un effet marqué de retardement de la gélatinisation. Le second fait est que le présent amidon dispersible présente une viscosité Brabender croissante ou constante en dispersion aqueuse à 95°C, c'es-à-dire qu'il ne présente pas de pic Brabender ou en d'autres termes qu'il résiste bien au brassage mécanique à 95°C et que ses granules n'éclatent pas facilement après avoir gonflé au cours de la gélatinisation. Un troisième fait est qu'il peut présenter une viscosité Brabender comprise entre 150 et 350 BU en dispersion aqueuse à 6% en poids après 5 min à 95°C. Ceci signifie que son pouvoir épaississant n'a pas été réduit à une proportion négligeable du pouvoir épaississant des amidons natifs exprimé par la hauteur de leur pic Brabender. Ce domaine de viscosité de 150 à 350 BU est indiqué ici comme domaine préféré et non impératif. Cependant, trop au-delà de 350 BU il faut craindre l'entrée en jeu d'un début de gélatinisation des granules d'amidon lors dudit traitement thermique et l'apparition éventuelle de problèmes de collage. De même, trop en-deça de 150 BU il faut craindre une certaine inaptitude au gonflement des granules et une texture non seulement trop fluide mais également sableuse de la dispersion.

Le présent amidon dispersible à 95-100% dans l'eau bouillante est destiné à être utilisé, seul ou en combinaison avec d'autres ingrédients secs ou déshydratés eux-mêmes dispersibles dans l'eau bouillante, en guise d'agent liant ou épaississant dans la confection de préparations culinaires, notamment dans la confection de sauces et potages.

Les exemples ci-après sont donnés à titre d'illustration. Dans ces exemples, la température de gélatinisation (°C), la viscosité Brabender après 5 min à 95°C (BU) et la dispersibilité dans l'eau bouillante (%) sont définies et déterminées comme indiqué plus haut dans le présent exposé. Les pourcentages sont donnés en poids sauf indication contraire.

Exemples 1 - 3

On prépare de la manière suivante quelques mélanges. On ajoute de l'eau à l'amidon de pommes de terre natif dans un petit mélangeur du commerce. On ajoute encore un prémélange préparé à chaud d'eau et de monoesters d'acides gras, en l'occurence des monoglycérides distillés d'origine végétale. Les quantités respectives sont calculées en sorte que les mélanges ainsi préparés présentent diverses teneurs en eau et contiennent diverses quantités de monoesters d'acides gras exprimées en % par rapport au poids sec d'amidon de pommes de terre natif. On traite ces mélanges thermiquement aux micro-ondes durant différents temps (t).

Pour ce faire, on place 250 g d'un mélange dans une assiette que l'on dispose dans un four à micro-ondes délivrant une puissante de 1200 W à 2450 $MH_2$. Dans ces conditions, la température du mélange monte très rapidement à 100°C et se maintient à 100°C durant tout le traitement.

On laisse ensuite le mélange traité refroidir à l'air ambiant et on le broye en particules de dimensions inférieures à 0.5 mm.

Les conditions de préparation ainsi que les températures de gélatinisation (Tgél) et les viscosités Brabender après 5 min à 95°C ($\eta$; 5 min, 95°C) en dispersion aqueuse à 6% des amidons dispersibles ainsi préparés sont réunies dans le tableau ci-après:

| Exemple No. | Mélange eau % | monoglycérides % | Traitement 100°C t min | Amidon dispersible | |
|---|---|---|---|---|---|
| | | | | Tgél °C | $\eta$ (5 min, 95°C) BU |
| 1 | 25 | 2 | 2,5 | 81 | 330 |
| 2 | 25 | 5 | 4 | 83 | 300 |
| 3 | 27 | 5 | 2,5 | 83 | 350 |

Tous ces amidons dispersibles ainsi préparés présentent une dispersibilité dans l'eau bouillante de 95 à 100%. Leur viscosité Brabender croit de 270 à 330, 300 et 350 BU durant les 5 premières minutes à 95°C puis elle ne croit presque plus et reste pratiquement constante durant les 15 minutes suivantes à 95°C.

4

Exemples comparatifs

On prépare de manière semblable à celle décrite à l'exemple 1 deux mélanges présentant chacun une teneur en eau de 25% mais contenant l'un 0.2% et l'autre 0.8% seulement de monoesters d'acides gras par rapport au poids sec d'amidon de pommes de terre natif.

On traite thermiquement ces deux mélanges durant 2,5 min aux micro-ondes de la manière décrite aux exemples 1-3. Les deux produits obtenus présentent une dispersibilité dans l'eau bouillante supérieure à 50% mais qui n'atteint de loin pas 95%.

Exemple 4

On prépare un prémélange d'eau à 95°C et d'un émulsifiant contenant des monostéarate, distéarate, monopalmitate et dipalmitate de glycérol d'origine animale et présentant une teneur en monoesters de 40%.

On introduit de l'amidon de pommes de terre natif dans un moulin à couteaux et l'on déverse le prémélange refroidi à 70°C sur l'amidon tout en brassant. Les quantités respectives d'amidon, d'eau et d'émulsifiant sont calculées de manière que le mélange ainsi préparé présente une teneur en eau de 26% et contienne 1,4% de monoesters par rapport au poids sec d'amidon.

On dispose le mélange dans des barquettes en polytétrafluoréthylène, à raison de 90 g par barquette. On place les barquettes sur une bande transporteuse qui traverse un four à micro-ondes délivrant une puissance de 3,5 kW à 2450 $MH_2$. La bande débite ainsi 15,6 kg de mélange en barquettes par h et les barquettes séjournent 210 s dans le four, La température du mélange monte très rapidement à 100°C dans le four et se maintient à 100°C durant toute la traversée, autrement dit durant tout le traitement thermique.

On laisse le mélange ainsi traité refroidir à température ambiante. On le broye grossièrement en particules présentant des dimensions de quelques mm. On le sèche à l'air chaud jusqu'à ce que sa teneur en eau résiduelle soit de environ 10%. On le broye finement en particules de dimensions inférieures à 0,5 mm.

L'amidon dispersible ainsi préparé présente une dispersibilité de 100%. En dispersion aqueuse à 6%, il présente une température de gélatinisation de 84°C et une viscosité Brabender après 5 min à 95 °C de 300 BU. Sa viscosité Brabender-se comporte de la même manière que celle des amidons dispersibles des exemples 1 à 3 durant la période d'attente ou maintien à 95°C.

Exemple 5

On prépare un amidon dispersible de la manière décrite à l'exemple 4 à l'exception des faits que le mélange présente une teneur en eau de 29%, ladite bande débite 10.6 kg de mélange en barquettes par h et les barquettes séjournent 220 s dans le four.

L'amidon dispersible ainsi préparé présente une dispersibilité dans l'eau bouillante de 100%. En dispersion aqueuse à 6%, il présente une température de gélatinisation de 84°C et une viscosité Brabender après 5 min à 95°C de 280 BU. Sa viscosité Brabender se comporte de la même manière que celle des amidons dispersibles des exemples 1 à 3 durant la période d'attente ou maintien à 95°C.

**Revendications**

1. Procédé de préparation d'un amidon dispersible dans l'eau bouillante, par traitement thermique en présence d'eau et d'un émulsifiant, caractérisé par le fait que l'on prépare un mélange d'amidon, d'un émulsifiant comprenant au moins un monoester d'acide gras, à raison de 1 à 5% en poids de monoester d'acide gras par rapport au poids sec de l'amidon, et d'eau, de sorte que la teneur en eau du mélange soit de 20 à 30% en poids, et l'on traite thermiquement le mélange aux micro-ondes à une température de 90-120°C durant 1-20 min pour obtenir un amidon dispersible à 95-100% dans l'eau bouillante.

2. Procédé selon la revendication 1, caractérisé par le fait que ledit amidon est l'amidon de pommes de terre.

3. Procédé selon le revendication 1, caractérisé par le fait que l'on prépare un mélange présentant une teneur en eau de 25 à 30% en poids et qu'on le traite thermiquement durant 1 à 5 min.

4. Procédé selon la revendication 3, caractérisé par le fait que, après le traitement thermique, on broye grossièrement l'amidon, on le sèche et on le broye finement.

## Claims

1. A process for the production of a starch dispersible in boiling water by heat treatment in the presence of water and an emulsifier, characterized in that a mixture of starch, an emulsifier containing at least one fatty acid monoester in a quantity of 1 to 5% by weight of fatty acid monoester, based on the dry weight of the starch, and water is prepared, the water being used in such a quantity that the mixture has a water content of 20 to 30% by weight, and in that the mixture is heat-treated with microwaves for 1 to 20 mins. at a temperature of 90 to 120°C to form a starch 95 to 100% dispersible in boiling water.

2. A process as claimed in claim 1, characterized in that the starch is potato starch.

3. A process as claimed in claim 1, characterized in that a mixture having a water content of 25 to 30% is prepared and heat-treated for 1 to 5 mins.

4. A process as claimed in claim 3, characterized in that, after the heat treatment, the starch is coarsely ground, dried and then finely ground.

## Patentansprüche

1. Verfahren zur Herstellung einer in kochendem Wasser dispergierbaren Stärke durch thermische Behandlung in Anwesenheit von Wasser und eines Emulgators, dadurch gekennzeichnet, daß man aus Stärke, eine Emulgator, der wenigstens einen Fettsäuremonoester im Ausmaß von 1 bis 5 Gew.-% Fettsäuremonoester, bezogen auf das Trockengewicht der Stärke, umfaßt, und Wasser ein solches Gemisch bereitet, daß der Wassergehalt des Gemisches 20 bis 30 Gew.-% beträgt, und daß man das Gemisch bei einer Temperatur von 90 bis 120°C während 1 bis 20 Minuten einer Microwellen-Wärmebehandlung unterwirft, um eine zu 95 bis 100% in kochendem Wasser dispergierbare Stärke zu erhalten.

2. Verfahren nach Anspruch 1, dadurch gekennzeichnet, daß die genannte Stärke Kartoffelstärke ist.

3. Verfahren nach Anspruch 1, dadurch gekennzeichnet, daß man ein Gemisch bereitet, das einen Wassergehalt von 25 bis 30 Gew.-% aufweist, und daß man das Gemisch 1 bis 5 Minuten lang einer Wärmebehandlung unterwirft.

4. Verfahren nach Anspruch 3, dadurch gekennzeichnet, daß man die Stärke nach der Wärmebehandlung grob mahlt, sie trocknet und fein mahlt.